# EUROPÄISCHE PATENTSCHRIFT

(11) **EP 2 365 617 B1**
(45) Veröffentlichungstag und Bekanntmachung des Hinweises auf die Patenterteilung: **03.05.2017**
(21) Anmeldenummer: 11157137.8
(22) Anmeldetag: 07.03.2011
(51) Int. Cl.: H02K 41/035, H02K 41/03, H02K 1/27, H02K 7/08, H02K 7/14, H02P 8/00, H02P 8/08

(54) **Elektromagnetischer Linear-Schrittmotor**
Electromagnetic linear step motor
Moteur pas à pas linéaire électromagnétique

(30) Priorität: 10.03.2010 DE 102010015905
(43) Veröffentlichungstag der Anmeldung: 14.09.2011
(73) Patentinhaber: Karl Storz GmbH & Co. KG, 78532 Tuttlingen (DE)
(72) Erfinder: Kelp, Martin, 10243 Berlin (DE)
(74) Vertreter: Witte, Weller & Partner Patentanwälte mbB

(56) Entgegenhaltungen:
- WO-A1-2007/141075
- DE-A1- 10 323 629
- DE-A1-102004 041 618
- DE-A1-102008 038 926
- JP-A- 2008 193 760
- US-A1- 2006 055 360

## Beschreibung

### Technisches Gebiet

Die Erfindung betrifft einen linearen Schrittmotor insbesondere für optische Systeme. Derartige optische Systeme werden beispielsweise in Endoskopen eingesetzt. Bei modernen Videoendoskopen sind ein Kamerachip sowie ein zugehöriges Linsensystem in die Endoskopspitze integriert. Zur Einstellung der Brennweite bzw. des Fokus des Linsensystems wird ein miniaturisierter Motor benötigt.

### Stand der Technik

Klassische Endoskope, wie sie beispielsweise für die minimalinvasive Chirurgie eingesetzt werden können, führen das Bild mittels Stablinsen vom intrakorporalen Objektiv zum extrakorporalen Okular. Durch die Stablinsen ist das System starr und in der optischen Qualität begrenzt. Moderne Videoendoskope verwenden einen Kamerachip in der Endoskopspitze. Ein solches Endoskop ist in der US 7,365,768 B1 offenbart. Dieses hat vor dem Kamerachip eine starr angeordnete Linse. Eine Einstellung der Brennweite der Linse ist nicht möglich. Die DE 196 18 355 C2 zeigt einen in Endoskope integrierbaren Linearantrieb zum Einstellen der Brennweite eines Linsensystems. Dazu wird ein Permanentmagnet als Läufer innerhalb einer Statorspule bewegt. Der Linearantrieb benötigt Strom um eine bestimmte Position halten zu können. Der Zusammenhang zwischen dem Spulenstrom und der Läuferposition ist nicht eindeutig und macht einen zusätzlichen Wegsensor mit Lageregelung notwendig. Der Verfahrweg des Läufers wird durch die Länge des magnetischen Systems bestimmt. Um lange Wegstrecken zu realisieren, sind eine entsprechende magnetische Länge des Läufers sowie doppelt so lange Solenoidspulen erforderlich.

Die DE 37 17 872 C2 offenbart einen Antrieb mit einem Läufer und einem Stator für ein Linsensystem in Videokameras. Der Läufer besteht aus zwei Eisenhülsen, welche durch einen Träger zur Aufnahme des Linsensystems miteinander verbunden sind. Der Stator hat zwei Spulen sowie einen einzigen ringförmigen Permanentmagneten zur Erzeugung der für die Bewegung notwendigen Magnetfelder zwischen den Spulen. Der komplexe Aufbau des Antriebs kann bei Videokameras mit Linsendurchmessern im Zentimeterbereich gut realisiert werden, ist aber nicht auf die für endoskopische Anwendungen benötigte Größe im Millimeterbereich skalierbar.

In der DE 103 23 629 A1 ist ein Wanderfeld-Linearmotor offenbart, der mindestens drei Statorspulen aufweist. Durch eine phasenverschobene Bestromung der Spulen wird ein Wanderfeld erzeugt, welches eine Verschiebung des Läufers mit axialen Permanentmagneten bewirkt. Zur Erzeugung des Wanderfeldes wird eine aufwendige Ansteuerschaltung benötigt.

Aus der DE 10 2008 038 926 A1 ist ein Linearantrieb bekannt, der zwei axial polarisierte Permanentmagnete im Läufer aufweist. Der Läufer hat eine stabile Position, von der aus er durch die Bestromung der Statorspulen in axialer Richtung ausgelenkt wird.

In der JP 2008/193760 A ist ein Linearmotor offenbart, welcher Läufer mit mehreren Permanentmagneten und einen Stator mit mehreren Statorwicklungen umfasst, wobei die Statorwicklungen gleich beabstandet sind und zwischen jeweils zwei Statorwicklungen ein Statorpolschuh angeordnet ist.

Die DE 10 2004 041 618 A1 offenbart eine Startervorrichtung zum Andrehen von Brennkraftmaschinen, welche einen Linearmotor aufweist.

### Darstellung der Erfindung

Der Erfindung liegt die Aufgabe zugrunde, einen Linearmotor mit derart kleinen Abmessungen zu schaffen, dass dieser in Endoskopen eingesetzt werden kann. Weiterhin soll der Linearmotor eine definierte Positionierung ohne zusätzlichen Positionssensor ermöglichen. Zudem soll der Linearmotor große Antriebskräfte bei kleiner Masse aufweisen und somit eine schnelle, kontinuierliche und exakte Positionierung optischer Komponenten in einem möglichst großen Bereich ermöglichen. Dabei darf der Strahlengang durch das optische System beim Verschieben der Komponenten nicht blockiert werden. Die Verlustleistung des Linearmotors soll gering sein, so dass wenig Wärme in der Spitze eines Endoskops entsteht. Für eine einfache Fertigung und Montage soll der Antrieb aus möglichst wenigen und geometrisch einfachen Einzelbauteilen zusammengesetzt sein.

Diese Aufgabe wird durch eine Vorrichtung nach Anspruch 1 bzw. Anspruch 2 gelöst. Vorteilhafte Ausgestaltungen der Erfindung sind in den Unteransprüchen angegeben.

Der erfindungsgemäße lineare Schrittmotor umfasst einen Stator sowie einen dazu linear verschiebbaren Läufer. Der Läufer kann in einem stromlosen Zustand N stabile Positionen entsprechend N Schritten einnehmen. Er wird vom Stator in radialer Richtung vollständig umschlossen und weist wenigstens einen Permanentmagneten mit Läuferpolschuhen an jeder Seite des Permanentmagneten auf. Der Läufer ist also immer kürzer als der Stator und bewegt sich innerhalb des Stators. Der Stator hat mindestens (N+2), bevorzugterweise genau (N+2) Statorpolschuhe, die in einem näherungsweise konstanten Raster angeordnet sind. Somit sind jeweils zwei benachbarte Statorpolschuhe näherungsweise gleich weit voneinander entfernt. Wahlweise können die Abstände zweier Statorpolschuhe um 10%, bevorzugt um 5% voneinander abweichen. Bevorzugt ist der Abstand zwischen zwei Läuferpolschuhen größer oder gleich dem Abstand zwischen Z Statorpolschuhen. Dabei ist die Zahl Z eine ganze Zahl größer oder gleich 2. Besonders bevorzugt ist der Abstand zwischen zwei Läuferpolschuhen größer oder gleich dem Abstand zwischen Z Statorpolschuhen plus der Länge der Statorpolschuhe in axialer Richtung. Alternativ kann der Abstand zweier Läuferpolschuhe dem Abstand von Z Statorpolschuhen entsprechen. Wahlweise kann der Abstand zweier Läuferpolschuhe auch um 10%, bevorzugt um 5% von dem Abstand von Z Statorpolschuhen abweichen.

Die Statorpolschuhe sind von einem Rückschlußelement umschlossen. Weiterhin ist wenigstens eine Spule zwischen zwei Statorpolschuhen angeordnet. Der Läufer nimmt innerhalb des Stators durch die Reluktanzkräfte stabile Ruhepositionen ein, bei denen bevorzugt die Statorpolschuhe in etwa den Läuferpolschuhen gegenüber liegen. Durch Bestromung der wenigstens einen Spule kann der Läufer innerhalb des Stators zwischen den verschiedenen stabilen Ruhepositionen verschoben werden. Zur Verschiebung genügt ein kurzer Stromimpuls typischerweise im Bereich einiger weniger Millisekunden. Für die Bewegung ist die Stromrichtung in diejenigen Spule beziehungsweise Spulen relevant, neben der oder in der sich der Permanentmagnet gerade befindet. Je nach der Stromrichtung kann der bewegliche Läufer angezogen oder abgestoßen werden. Durch die zuvor beschriebene Dimensionierung des Abstandes der Läuferpolschuhe wird erreicht, dass zumindest in einem gewissen Bereich während der Verschiebung zwischen zwei stabilen Ruhepositionen die Läuferpolschuhe keinen Statorpolschuhen gegenüber liegen. Zur Erhöhung der Steifigkeit können zusätzliche Spulen bestromt werden.

In der Erfindung liegen zwischen zwei Spulen 2 oder 3 Statorpolschuhe.

Ein erfindungsgemäßer Linearmotor hat bevorzugt einen rotationssymmetrischen Läufer und/oder einen rotationssymmetrischen Stator. Bevorzugt ist der Linearmotor rotationssymmetrisch mit ringförmigen Rückschlußelement, Polschuhen, Permanentmagneten sowie ringförmigen Spulen (Ringspulen) ausgeführt. Der Läufer und insbesondere der wenigstens eine Permanentmagnet sowie die Polschuhe sind bevorzugt hohlzylindrisch, d.h. sie haben die Form einer zylindrischen Hülse. Der Strahlengang eines optischen Systems kann dann durch die Hülse verlaufen. Insbesondere kann eine Linse oder ein anderes optisches Element in der Hülse sitzen. Somit kann durch eine Verschiebung der Hülse die Brennweite und/oder auch der Fokus des optischen Systems eingestellt werden.

Der Linearmotor ermöglicht zwischen zwei Endstellungen eine exakte Einstellung der Position des Läufers relativ zum Stator. Die Einzelbauteile haben eine einfache Geometrie (Ringe, Hülsen) und sind deshalb einfach herstell- und montierbar.

Die Polschuhe und das Rückschlußelement müssen immer ferromagnetische und/oder weichmagnetische Materialien umfassen.

Der Linearmotor ist bis zu einer Größe von wenigen Millimetern Außendurchmesser problemlos miniaturisierbar. Die Verfahrstrecke zwischen den beiden Endstellungen des Läufers liegt bei einem Motor mit wenigen Millimetern Außendurchmesser typischerweise bei etwa 1 bis 3 mm.

Die Spulen können wahlweise auf einen Spulenkörper oder auch ohne Spulenkörper gewickelt sein. Sie können auch mehrteilig sein, d.h. aus mehreren Wicklungen bestehen.

Eine detaillierte Darstellung der Funktion des Motors findet sich in der Beschreibung der Figuren.

In einer weiteren vorteilhaften Ausgestaltung der Erfindung ist zwischen dem Stator und dem Läufer eine Gleitschicht. Diese kann insbesondere im Falle einer rotationssymmetrischen Anordnung als Gleithülse ausgeführt sein. Um die Magnetfelder möglichst wenig zu beeinflussen soll die Gleitschicht aus einem nicht magnetfeldführenden Material, insbesondere aus einem nicht- ferromagnetischen Material bestehen. Ihre Oberfläche umfasst bevorzugt ein Material mit niedrigem Reibungskoeffizienten, beispielsweise PTFE (Polytetrafluorethylen), Siliziumnitrid, Siliziumkarbid, poly-para-Xylylen Polymere oder DLC (diamond like carbon) wie beispielsweise in der US 5,478,650 offenbart. Ebenso kann die Oberfläche auch poliert sein, um die Reibung weiter zu verringern.

Die Gleitschicht kann Unebenheiten auf der dem Läufer zugewandten Seite des Stators ausgleichen.

Der beschriebene Linearmotor kann in einer alternativen Ausführungsform mit einem ebenen, z.B. plattenförmig aufgebauten Stator und ebenfalls ebenen bzw. plattenförmigen Polschuhen des Läufers realisiert werden. Alternativ können auch mehrere um einen Zylinder oder einen vieleckigen Körper angeordnete Linearmotoren vorgesehen sein. So ergibt sich beispielsweise bei einer gleichmäßigen Anordnung von Linearmotoren um einen Zylinder eine stabile Führung.

Ein erfindungsgemäßer Linearmotor kann auch aus Vollmaterial bestehen und an einem Ende einen Stößel zur Positionierung von Instrumenten aufweisen. Eine solche Vorrichtung ist bevorzugt in der Molekularbiologie, der Mikroelektronik oder auch der Neurochirurgie einsetzbar. Ebenso ist auch eine Positionierung von größeren Bauteilen, wie von Ventilen möglich.

Besonders günstig ist es, wenn die Spulen mit einem Gleichstrom mit überlagertem Wechselstrom kleiner Amplitude und einer Frequenz bis maximal 1kHz gespeist wird. Dadurch kann die Haft- und die Gleitreibung reduziert werden.

In einem erfindungsgemäßen Verfahren zum Betrieb eines Linearmotors wird zumindest eine der Spulen über einen längeren Zeitraum bestromt, das heißt mit Strom versorgt, um die Steifigkeit und somit die Haltekraft bei Auslenkung aus einer stabilen Ruheposition zu erhöhen.

Ein weiterer Aspekt der Erfindung ist ein Verfahren zum Betrieb eines Linearmotors, wobei der Linearmotors mit einem Gleichstrom und einem überlagertem Wechselstrom kleiner Amplitude und einer Frequenz bis maximal 1kHz gespeist wird. Dadurch kann die Haftreibung beziehungsweise Gleitreibung im Inneren des Motors reduziert werden.

Ein weiterer Aspekt der Erfindung ist ein Verfahren zur Kalibrierung der Positionen. Es wird nach dem Einschalten des Schrittmotors eine Kalibrierung durchgeführt, bei der der Läufer an eine definierte Position, vorzugsweise eine Endposition verschoben wird.

Der Stator kann durch weitere Magnetspulen, Weicheisenringe und Distanzstücke beliebig verlängert werden. Dadurch lässt sich die Anzahl der Schritte und damit die Verfahrstrecke des Läufers beliebig lang gestalten. Dies hat den Vorteil, dass der Läufer des vorliegenden Antriebs beliebige Verfahrwege zurücklegen kann, wodurch eine Vielzahl von Anwendungen für den Aktor in Frage kommt. Mit dem elektromagnetischen Linear - Schrittmotor lassen sich Stellaufgaben aller Art durchführen. Ein großes Einsatzgebiet ist z.B. der Bereich der Endoskopie. Aktuelle Entwicklungen sehen eine Linearbewegung von optischen Komponenten innerhalb des Endoskopschafts vor. Hierzu zählt beispielsweise die Bewegung von Linsen, Linsengruppen, Blenden, oder auch Bildaufnehmern eines optischen Systems. Des Weiteren kann der vorliegende Antrieb für Schließvorrichtungen aller Art eingesetzt werden. Dazu zählt beispielsweise die Bewegung eines Stößels für Ventile oder eines Verschlussbolzens für Schlösser.

Je nach Anwendungsfall lässt sich der vorliegende Antrieb miniaturisiert oder vergrößert ausführen. Dabei kann die Auslegung beliebig angepasst werden, um die notwendigen Haltekräfte, Stellwege und die Anzahl der stabilen Positionen zu gewährleisten.

Durch die hohe Steifigkeit, die systembedingt an den stabilen Läuferpositionen herrscht, ergibt sich eine hohe Positioniergenauigkeit. Die Läuferpositionen werden dadurch auch unter Einflüssen wie Reibung oder Erdbeschleunigung hochgenau angefahren.

Ein großer Vorteil des Linear - Schrittmotors ist der niedrige Energieverbrauch. Nur bei der Bewegung des Läufers ist ein kurzer Stromimpuls notwendig. Während des Verweilens des Läufers in einer stabilen Position ist kein Stromfluss erforderlich. Der permanentmagnetische Läufer wird durch die Reluktanzkraft in der stabilen Position gehalten. Je nach Magnetwerkstoff und Magnetvolumen der verwendeten Permanentmagneten lässt sich die Steifigkeit und damit die Positioniergenauigkeit des vorliegenden Antriebs erhöhen. Die Positionsgenauigkeit des Läufers ist nicht von der Stromstärke in den Spulen, sondern von der Höhe des magnetischen Flusses im magnetischen Kreis des Permanentmagneten abhängig. Ungeachtet dessen, besteht die Möglichkeit, durch Permanent-Bestromung in den Spulen Magnetfelder aufrechtzuerhalten, die die Steifigkeit des Antriebes zusätzlich erhöhen.

Gegenüber Spindelantrieben kommen beim vorliegenden Antrieb alle Vorteile von Linear - Direktantrieben zum Tragen. Vor allem die hohe Dynamik des beschriebenen Linear - Schrittmotors ist bemerkenswert. Der Läufer erreicht nach einer Zeit von wenigen Millisekunden seine Sollposition. Die auftretende Reibung, der Verschleiß und die aufzubringende Leistung sind bei Direktantrieben viel geringer als bei Antrieben, bei denen eine Rotations- in eine Translationsbewegung umgewandelt wird. Hier existieren auch hinsichtlich der Fertigung entscheidende Vorteile. Alle für den beschriebenen Antrieb verwendeten Bauteile sind rotationssymmetrisch und einfach zu fertigen.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt schematisch einen Schrittmotor entsprechend der Erfindung.
- Figur 2: zeigt den Schrittmotor mit einer andern Läuferposition.
- Figur 3: zeigt den Schrittmotor mit einer weiteren Läuferposition.
- Figur 4: zeigt einen Schrittmotor mit vier Spulen.
- Figur 5: zeigt den magnetischen Fluss in einer ersten Position ohne Bestromung.
- Figur 6: zeigt den magnetischen Fluss in einer ersten Position mit Bestromung.
- Figur 7: zeigt den magnetischen Fluss in einer zweiten Position ohne Bestromung.
- Figur 8: zeigt den magnetischen Fluss in einer zweiten Position mit Bestromung.
- Figur 9: zeigt Kraft-Weg Kennlinien des Schrittmotors bei unterschiedlichen Spulenströmen.
- Figur 10: zeigt einen weiteren Schrittmotor mit zwei stabilen Läuferpositionen.
- Figur 11: zeigt den Motor nach Figur 10 mit dem Läufer in der zweiten stabilen Position.
- Figur 12: zeigt einen Schrittmotor mit vier Spulen.
- Figur 13: zeigt den Schrittmotor nach Figur 12 mit einer anderen Läuferposition.
- Figur 14: zeigt den Schrittmotor nach Figur 12 mit einer weiteren Läuferposition.
- Figur 15: zeigt den Schrittmotor nach Figur 12 mit einer weiteren Läuferposition.
- Figur 16: zeigt einen weiteren Schrittmotor.
- Figur 17: zeigt beispielhaft die Bewegung eines Schrittmotors nach einer der Figuren 12 bis 15 als Funktion der Zeit.

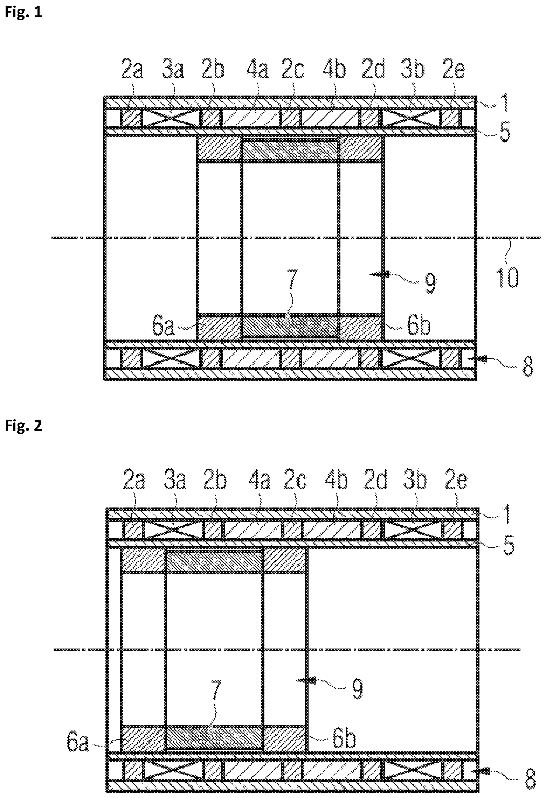

Figur 1 zeigt schematisch ein Ausführungsbeispiel einer erfindungsgemäßen Anordnung in zylindrischer Bauform im Schnitt. Der Stator 8 umfasst ein Rückschlußelement 1 in Form eines weichmagnetischen Rückschlussrohrs, in dessen Bohrung die Statorpolschuhe 2a - 2e aus weichmagnetischem Material in festen, gleichmäßigen Abständen angeordnet sind. Zwischen den Statorpolschuhe liegen die Spulen 3a, 3b und die nichtmagnetischen Distanzstücke 4a, 4b. Der Abstand zweier Statorpolschuhe entspricht der Länge einer Spule. Eine Gleitschicht 5 in Form einer Gleithülse schließt hier den Stator 8 nach innen ab und stellt eine reibungsarme Oberfläche für den Läufer 9 zur Verfügung. Die Gleithülse muss aus einem nicht-ferromagnetischen Material bestehen. Der Läufer 9 umfasst hier einen in Richtung der Mittelachse 10 magnetisierten Permanentmagnet 7 der als Ringmagnet ausgeführt ist. An den beiden Stirnseiten entsprechend den Polen des Permanentmagnets sind die Läuferpolschuhe 6a, 6b angeordnet. Der Abstand der Läuferpolschuhe zueinander entspricht der Länge des Permanentmagnetes. Der Läufer ist axial in beide Richtungen innerhalb der Gleithülse verschiebbar. Die Läuferpolschuhe 6a, 6b stehen in der dargestellte Ruhelage den Statorpolschuhen 2b, 2d gegenüber. Durch die Reluktanzkraft ergibt sich eine stabile Lage des Läufers. In die Bohrung des Läufers kann ein zu positionierendes Element, wie eine optische Komponente, eingebracht werden. Die Mittelachse 10 ist bei rotationssymmetrisch aufgebauten Anordnungen auch die Rotationsachse.

Figur 2 zeigt den Schrittmotor aus Fig. 1 mit einer anderen Läuferposition. Auch hier ergibt sich durch die Reluktanzkraft eine stabile Lage des Läufers. Die Läuferpolschuhe 6a, 6b stehen in der dargestellte Ruhelage den Statorpolschuhen 2a, 2c gegenüber.

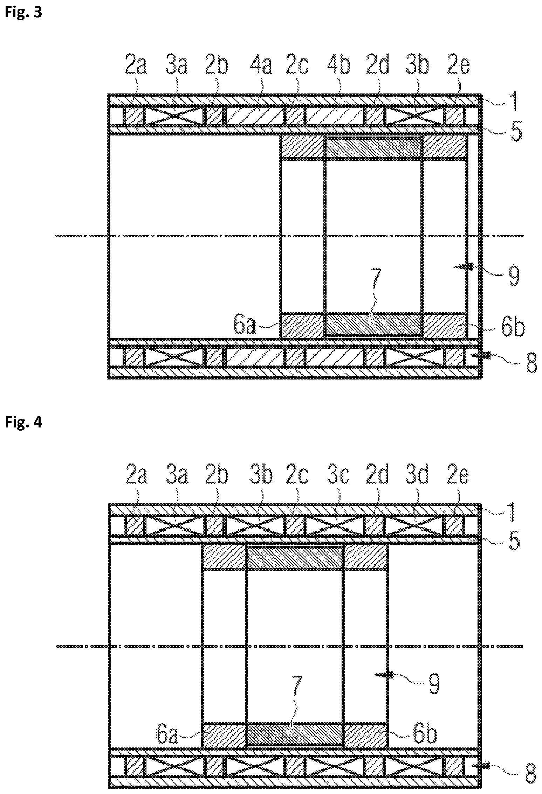

Figur 3 zeigt den Schrittmotor aus Fig. 1 mit einer weiteren Läuferposition. Auch hier ergibt sich durch die Reluktanzkraft eine stabile Lage des Läufers. Die Läuferpolschuhe 6a, 6b stehen in der dargestellte Ruhelage den Statorpolschuhen 2c, 2e gegenüber.

Figur 4 zeigt einen Schrittmotor, der nicht von den Ansprüchen umfasst ist, mit 4 Spulen 3a - 3d. Es sind hier anstelle der Distanzstücke Spulen im Stator vorgesehen. Dadurch lässt sich eine gleichmäßigere Kraftwirkung auf den Läufer erzielen.

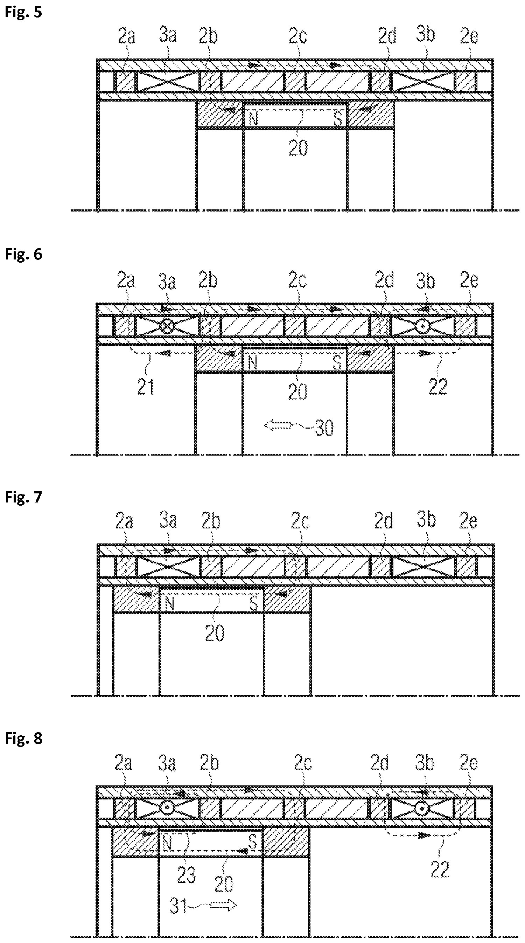

Figur 5 zeigt den magnetischen Fluss in einer ersten Position ohne Bestromung. Hier liegen die Läuferpolschuhe 6a und 6b gegenüber den Statorpolschuhen 2b und 2d. In dieser Position ist der magnetische Widerstand (Reluktanz) des magnetischen Kreises sehr gering. Das Magnetfeld schließt sich vom Nordpol N über den Läuferpolschuh 6a und den Statorpolschuh 2b über das Rückschlußelement 1 zu dem Statorpolschuh 2d und dem Läuferpolschuh 6b mit dem Südpol S des Permanentmagneten 7. Der Läufer befindet sich hier in einem stabilen Gleichgewicht. Wirkt auf den Läufer eine äußere Kraft, beispielsweise die Schwerkraft oder Trägheitskräfte, wird die Reluktanz vergrößert, da der Luftspalt größer wird, dabei entsteht eine der Bewegung entgegen wirkende Reluktanzkraft.

Figur 6 zeigt den magnetischen Fluss in einer ersten Position entsprechend Fig. 5, jedoch mit Bestromung. Zur Bewegung des Läufers werden die am Läufer angeordneten Spulen durch kurze Stromimpulse gespeist. Durch die Stromimpulse entstehen in den Spulen Magnetfelder 21, 22, die über die Statorpolschuhe und Läuferpolschuhe auf den Permanentmagneten wirken und sich dem Magnetfeld 20 des Permanentmagneten überlagern. Es ist hier eine Bestromung der beiden Spulen 3a und 3b dargestellt. Der Strom durch die Spule 3a fließt hier in die Zeichenebene hinein und erzeugt ein Magnetfeld 21, während der Strom durch die Spule 3b aus der Zeichenebene heraus fließt und ein Magnetfeld 22 erzeugt. Dadurch wird während der Bestromung die stabile Position des Läufers aufgehoben und es entstehen Reluktanzkräfte, die den Permanentmagneten und somit den Läufer in die gewünschte Richtung 30 zwingen. Je nach Richtung des elektrischen Stroms in den Spulen, kann sich der Läufer nach links oder rechts bewegen. Zur Bewegung des Läufers von einer stabilen Position in eine benachbarte stabile Position genügt ein einzelner Stromimpuls pro Spule. In der Abfolge Figur 6 nach Figur 7 ist eine Bewegung nach links dargestellt.

Figur 7 zeigt den magnetischen Fluss in einer zweiten Position ohne Bestromung. Hier liegen die Läuferpolschuhe 6a und 6b gegenüber den Statorpolschuhen 2a und 2c. In dieser Position ist der magnetische Widerstand (Reluktanz) des magnetischen Kreises wiederrum sehr gering. Das Magnetfeld schließt sich vom Nordpol N über den Läuferpolschuh 6a und den Statorpolschuh 2a über das Rückschlußelement 1 zu dem Statorpolschuh 2c und dem Läuferpolschuh 6b mit dem Südpol S des Permanentmagneten 7. Der Läufer befindet sich auch hier in einem stabilen Gleichgewicht.

Figur 8 zeigt den magnetischen Fluss in einer zweiten Position mit Bestromung. Durch einen Stromimpuls entstehen in den Spulen Magnetfelder 23, 22, die über die Statorpolschuhe und Läuferpolschuhe auf den Permanentmagneten wirken und sich dem Magnetfeld 20 des Permanentmagneten überlagern. Der Strom durch die Spule 3a fließt hier aus der Zeichenebene heraus und erzeugt ein Magnetfeld 23, ebenso fließt der Strom durch die Spule 3b aus der Zeichenebene heraus und erzeugt ein Magnetfeld 22. Das Magnetfeld 23 wirkt hier entgegengesetzt dem Magnetfeld 20, wodurch eine abstoßende Kraft zwischen der Spule 3a und den Permanentmagneten erreicht wird. Somit entsteht eine Kraft und als Folge eine Beschleunigung des Läufers nach rechts in die Richtung 31. Zur Bewegung des Läufers reicht das Magnetfeld der Spule 3a alleine aus. Es ist hier jedoch noch die Spule 3b bestromt um mit deren Magnetfeld die Steifigkeit in der mittleren Position S2, entsprechend Figur 5 zu erhöhen.

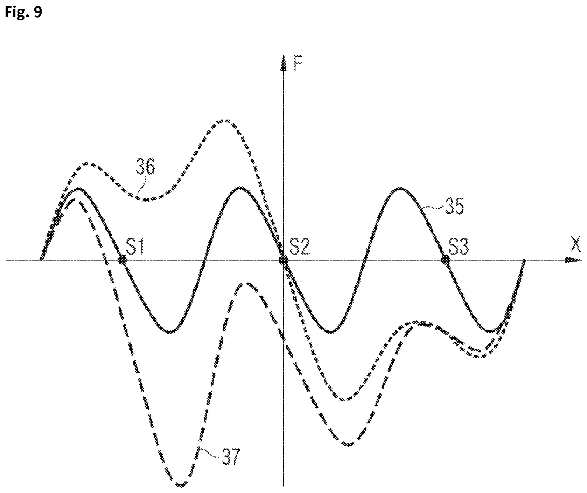

Figur 9 zeigt Kraft-Weg Kennlinien des Schrittmotors bei unterschiedlichen Spulenströmen. Hierbei ist die durch die Magnetfelder ausgeübte Kraft F auf den Läufer als Funktion der Auslenkung X des Läufers dargestellt. Die Kennlinie 35 zeigt den unbestromten Zustand, das heißt bei einem Spulenstrom 0. In den Punkten S1, S2 und S3 ist die Kraft auf den Läufer gleich 0. Bei einer positiven Auslenkung an einem dieser Punkte ergibt sich eine negative Rückstellkraft, die den Läufer wieder in die Ursprungsposition entsprechend einem der Punkte S1, S2 oder S3 zurückgestellt. Entsprechendes gilt für eine negative Auslenkung. Erfolgt nun eine Bestromung der Spulen wie in Figur 6 dargestellt, um eine Bewegung nach links zu erreichen, so ergibt sich der Kräfteverlauf nach Kurve 37. Es wird hier über einen weiten Bereich eine nach links wirkende negative Kraft auf den Läufer ausgeübt. Ein Gleichgewicht stellt sich an diejenigen Stelle ein, an der die Kurve 37 die X-Achse schneidet. Der erste Gleichgewichtspunkt liegt etwas links von dem Punkt S1. Befindet sich der Läufer nun vor der Bestromung im Punkt S2, so wird er durch die negative Kraft in Richtung des Punktes S1 bewegt. Nach dem abschalten des Stromes wird er durch die Rückstellkraft entsprechend der Kennlinie 35 in den Punkt S1 verschoben. Erfolgt nun eine Bestromung entsprechend der Figur 8, so ergibt sich die Kennlinie 36. Entsprechend wird auf den Läufer im Punkt S1 eine positive Kraft zur Bewegung nach rechts ausgeübt, bis dieser ein stabiles Gleichgewicht im Punkt S2 einnimmt. Nach dem Ausschalten des Stromes bleibt das Gleichgewicht in diesem Punkt erhalten (Kennlinie 36).

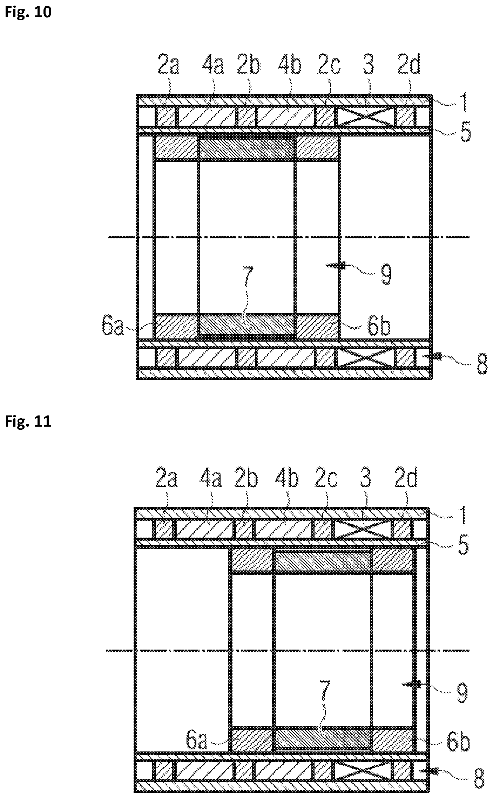

Figur 10 zeigt einen weiteren Schrittmotor mit zwei stabilen Läuferpositionen. Zur Bewegung des Läufers ist eine einzige Spule 3 vorgesehen. Hier ist der Läufer in einer ersten Position links dargestellt. Durch Bestromung der Spule kann er in eine zweite Position wie in Figur 11 gezeigt, bewegt werden.

Figur 11 zeigt den Schrittmotor aus Figur 10 mit dem Läufer in der zweiten stabilen Position rechts.

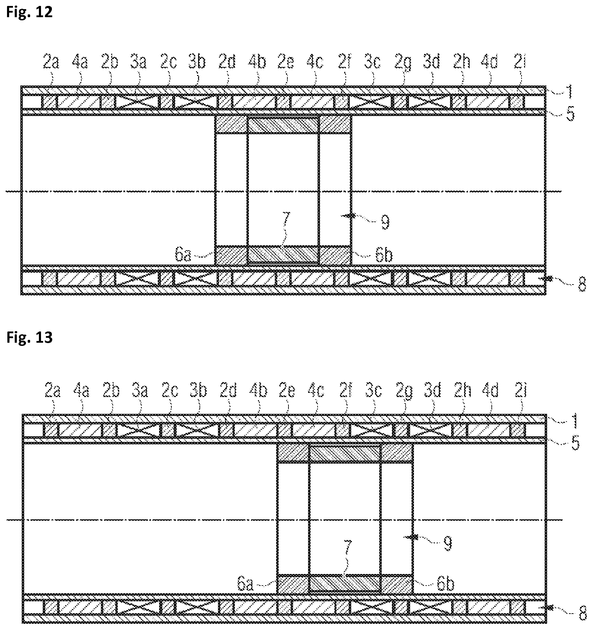

Figur 12 zeigt einen weiteren erfindungsgemäßen Schrittmotor mit vier Spulen 3a, 3b, 3c und 3d. Weiterhin sind noch Distanzstücke 4a, 4b, 4c und 4d vorgesehen. Der Läufer ist hier in einer ersten Position dargestellt. Grundsätzlich kann der Läufer hier sieben verschiedene stabile Positionen einnehmen. Um den Läufer von jeder beliebigen Position eindeutig positionieren zu können, ohne die IstPosition messtechnisch zu erfassen, ist es zweckmäßig, zunächst eine Nullfahrt zur Kalibrierung durchführen. Dabei werden die Spulen des Stators mit einer Sequenz aus Stromimpulsen derart gespeist, dass der Läufer in eine definierte Position (Nullposition) läuft. Diese ist bevorzugt eine Endposition am linken oder rechten Ende des Weges. Der Vorteil dieser Strategie besteht darin, dass die Ausgangslage des Läufers nicht bekannt sein muss. Nach der Nullfahrt kann der Läufer über die entsprechende Bestromungskonfiguration aus der Nullposition in eine gewünschte Sollposition bewegt werden. Für jede anzufahrende Position existiert genau eine Abfolge von Impulsen, was die Steuerung vereinfacht. Maximal sind mit dieser Methode sechs aufeinander folgende Impulse nötig, um den Läufer in diesem Beispiel zu positionieren. Folglich ist eine eindeutige Positionierung des Läufers, ohne Kontrolle der Ist- Position, in einigen Millisekunden möglich. Dieses Verfahren ist auch auf jeden anderen erfindungsgemäßen Schrittmotor unabhängig von dessen Positionszahl anwendbar.

Figur 13 zeigt den Schrittmotor nach Figur 12 mit einer anderen Läuferposition rechts von der Läuferposition aus Figur 12.

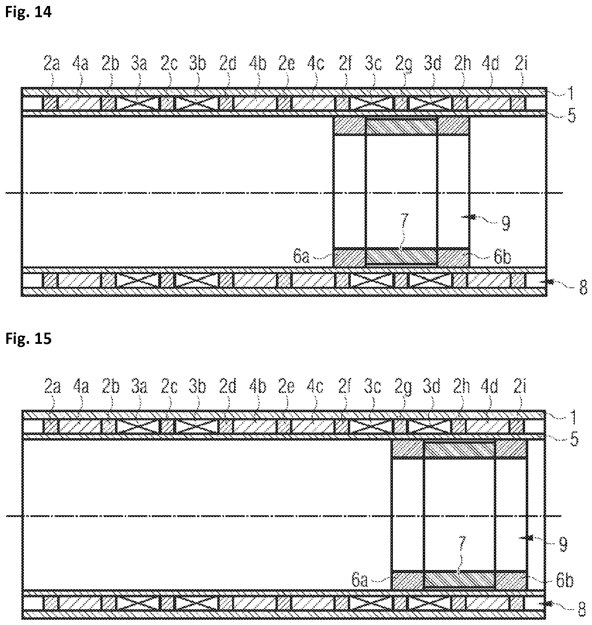

Figur 14 zeigt den Schrittmotor nach Figur 13 mit einer anderen Läuferposition rechts von der Läuferposition aus Figur 13.

Figur 15 zeigt den Schrittmotor nach Figur 14 mit einer anderen Läuferposition rechts von der Läuferposition aus Figur 14.

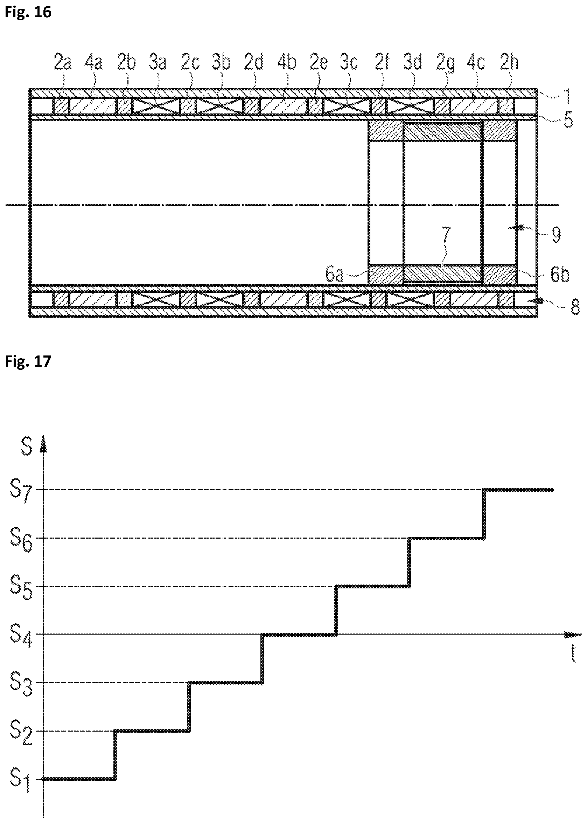

Figur 16 zeigt einen weiteren Schrittmotor.

Figur 17 zeigt beispielhaft die Bewegung eines Schrittmotors nach einer der Figuren 12 bis 15 als Funktion der Zeit. Hierbei wird jeweils eine entsprechende Spule derart bestromt, dass der Läufer der Reihe nach die Positionen S1 - S7 durchläuft.

### Bezugszeichenliste

- 1: Rückschlußelement
- 2a - 2i: Statorpolschuhe
- 3a - 3d: Spulen
- 4a - 4d: Distanzstücke
- 5: Gleitschicht
- 6a, 6b: Läuferpolschuhe
- 7: Permanentmagnet
- 8: Stator
- 9: Läufer
- 10: Mittelachse
- 20: Magnetfeld des Permanentmagneten
- 21: Magnetfeld der ersten Spule bei erster Stromrichtung
- 22: Magnetfeld der zweiten Spule bei erster Stromrichtung
- 23: Magnetfeld der ersten Spule bei zweiter Stromrichtung
- 30: Erste Bewegungsrichtung
- 31: Zweite Bewegungsrichtung
- 35: Kraftverlauf unbestromt
- 36: Kraftverlauf erste Stromrichtung
- 37: Kraftverlauf zweite Stromrichtung
- S1 - S7: Positionen
- N: Nordpol
- S: Südpol

## Patentansprüche

1. Linearer Schrittmotor zur Verschiebung eines Läufers (9) parallel zu einem Stator (8) mit N Schritten , wobei
der Stator (8) Statorpolschuhe (2a - 2i), die von einem Rückschlußelement (1) umschlossen und jeweils gleich weit von benachbarten Statorpolschuhen entfernt sind, sowie wenigstens zwei zwischen zwei Statorpolschuhen liegende Spulen (3a - 3d) aufweist, und der Läufer (9) in radialer Richtung vollständig vom Stator umschlossen ist und wenigstens einen parallel zum Stator magnetisierten Permanentmagneten (7) mit einem Läuferpolschuh (6a, 6b) an jeder Seite aufweist,
**dadurch gekennzeichnet, dass**
der Stator (8) wenigstens (N+2) Statorpolschuhe (2a - 2i), aufweist und zwischen zwei Spulen (3a - 3d) 2 oder 3 Statorpolschuhe liegen.

2. Linearer Schrittmotor zur Verschiebung eines Läufers (9) parallel zu einem Stator (8) mit N Schritten , wobei
der Stator (8) Statorpolschuhe (2a - 2i), die von einem Rückschlußelement (1) umschlossen und jeweils gleich weit von benachbarten Statorpolschuhen entfernt sind, sowie eine zwischen zwei Statorpolschuhen liegende Spule (3) aufweist, und der Läufer (9) in radialer Richtung vollständig vom Stator umschlossen ist und wenigstens einen parallel zum Stator magnetisierten Permanentmagneten (7) mit einem Läuferpolschuh (6a, 6b) an jeder Seite aufweist,
**dadurch gekennzeichnet, dass**
der Stator (8) wenigstens (N+2) Statorpolschuhe (2a - 2i), aufweist.

3. Schrittmotor nach einem der vorhergehenden Ansprüche,
**dadurch gekennzeichnet, dass**
der Abstand zwischen zwei Läuferpolschuhen größer oder gleich dem Abstand zwischen Z≥2 Statorpolschuhen und bevorzugt größer oder gleich dem Abstand zwischen Z≥2 Statorpolschuhen plus der Länge der Statorpolschuhe in axialer Richtung ist.

4. Schrittmotor nach einem der vorhergehenden Ansprüche,
**dadurch gekennzeichnet, dass**
der Läufer (9) durch die Reluktanzkräfte stabile Ruhepositionen einnimmt, bei denen bevorzugt die Statorpolschuhe (2a - 2i) den Läuferpolschuhen (6a, 6b) gegenüber liegen.

5. Schrittmotor nach einem der vorhergehenden Ansprüche,
**dadurch gekennzeichnet, dass**
im Inneren des Läufers (9) ein optisches Element aufgenommen werden kann.

6. Schrittmotor nach einem der vorhergehenden Ansprüche,
**dadurch gekennzeichnet, dass**
der Läufer (9) rotationssymmetrisch ist.

7. Schrittmotor nach einem der vorhergehenden Ansprüche,
**dadurch gekennzeichnet, dass**
der Stator (8) rotationssymmetrisch ist.

8. Schrittmotor nach einem der vorhergehenden Ansprüche,
**dadurch gekennzeichnet, dass**
eine Gleithülse (5) mit einem nicht ferromagnetischen Material mit niedrigem Reibungskoeffizienten an der Oberfläche zwischen Stator (8) und Läufer (9) angeordnet ist.

9. Schrittmotor nach einem der vorhergehenden Ansprüche,
**dadurch gekennzeichnet, dass**
der Läufer (9) aus Vollmaterial besteht und lediglich einen Stößel zur Positionierung von Instrumenten aufweist.

10. Schrittmotor nach einem der vorhergehenden Ansprüche,
**dadurch gekennzeichnet, dass**
wenigstens ein weiterer Läufer (9) vorgesehen ist, der unabhängig von dem ersten Läufer bewegt werden kann.

11. Verfahren zum Betrieb eines Schrittmotors nach einem der vorhergehenden Ansprüche,
**dadurch gekennzeichnet, dass**
zur Minderung der Haft- und Gleitreibung dem Gleichstrom durch eine Spule (3a - 3d) ein sehr kleiner Wechselstrom mit Frequenzen bis maximal 1 kHz überlagert wird.

12. Verfahren zum Betrieb eines Schrittmotors nach einem der vorhergehenden Ansprüche,
**dadurch gekennzeichnet, dass**
nach dem Einschalten des Schrittmotors eine Kalibrierung durchgeführt wird, bei der der Läufer an eine definierte Position, vorzugsweise eine Endposition verschoben wird.

## Claims

1. A linear stepper motor for displacement of a armature (9) parallel to a stator (8) with N steps, wherein
the stator (8) comprises stator pole pieces (2a-2i) which are enclosed by a magnetic guiding element (1) and are each at the same distance from neighboring stator pole pieces, and at least two coils (3a-3d) being located between two stator pole pieces, and the armature (9) is completely enclosed by the stator in radial direction, and comprises at least one permanent magnet (7) being magnetized parallel to the stator with a armature pole piece (6a, 6b) on each side,
**characterized in that**
the stator (8) comprises at least (N+2) stator pole pieces (2a-2i), and
two or three stator pole pieces are located between two coils (3a-3d).

2. Linear stepper motor for displacement of a armature (9) parallel to a stator (8) with N steps, wherein
the stator (8) comprises stator pole pieces (2a-2i) which are enclosed by a magnetic guiding element (1) and are each at the same distance from neighboring stator pole pieces, and a coil (3) being located between two stator pole pieces, and the armature (9) is completely enclosed by the stator in radial direction and comprises at least one permanent magnet (7) being magnetized parallel to the stator, with a armature pole piece (6a, 6b) on each side,
**characterized in that**
the stator (8) comprises at least (N+2) stator pole pieces (2a-2i).

3. Stepper motor according to one of the preceding claims,
**characterized in that**
the distance between two armature pole pieces is greater than or equal to
the distance between Z ≥ 2 stator pole pieces, and is preferably greater than or equal to the distance between Z ≥ 2 stator pole pieces plus the length of the stator pole piece in axial direction.

4. Stepper motor according to one of preceding claims,
**characterized in that**
based on the reluctance forces, the armature (9) occupies stable rest positions in which preferably the stator pole pieces (2a-2i) are located opposite to the armature pole pieces (6a, 6b).

5. Stepper motor according to one of preceding claims,
**characterized in that**
wherein an optical element can be accommodated within the armature (9).

6. Stepper motor according to one of preceding claims,
**characterized in that**
wherein the armature (9) is rotationally symmetrical.

7. Stepper motor according to one of preceding claims,
**characterized in that**
the stator (8) is rotationally symmetrical.

8. Stepper motor according to one of preceding claims,
**characterized in that**
a sliding sleeve (5) comprising a non-ferromagnetic material having a low friction coefficient on the surface is disposed between the stator (8) and the armature (9).

9. Stepper motor according to one of preceding claims,
**characterized in that**
the armature (9) consists of solid material and merely has a plunger for the positioning of instruments.

10. Stepper motor according to one of preceding claims,
**characterized in that**
at least one further armature (9) is provided which can be moved independently from the first armature.

11. A method for operating a stepper motor according to one of the preceding claims,
**characterized in that**
a very small alternating current having frequencies up to a maximum of 1 kHz is superposed on the direct current through a coil (3a-3d) to reduce the static and sliding friction.

12. A method for operating a stepper motor according to one of the preceding claims,
**characterized in that**
after switching on the linear stepper motor, a calibration is performed, in which the armature is displaced to a defined position, preferable an end position.

## Revendications

1. Moteur pas à pas linéaire pour le déplacement d'un bloc mobile (9) parallèlement à un stator (8) en N pas, dans lequel
le stator (8) comporte des pièces polaires de stator (2a - 2i) qui sont entourées par un élément de retour (1) et qui sont écartées à égale distance des pièces polaires voisines et au moins deux bobines (3a -3d) disposées entre deux pièces polaires de stator, et le bloc mobile (9) est entièrement entouré par le stator dans le sens radial et présente au moins un aimant permanent (7) magnétisé parallèlement au stator avec une pièce polaire de bloc mobile (6a, 6b) de chaque côté,
**caractérisé en ce que** le stator (8) comporte au moins (N+2) pièces polaires de stator (2a - 2i) et 2 ou 3 pièces polaires de stator sont placées entre deux bobines (3a - 3d).

2. Moteur pas à pas linéaire pour le déplacement d'un bloc mobile (9) parallèlement à un stator (8) en N pas, dans lequel le stator (8) comporte des pièces polaires (2a - 2i) qui sont entourées par un élément de retour (1) et qui sont écartées à égale distance des pièces polaires de stator voisines et une bobine (3) disposée entre deux pièces polaires de stator, et le bloc mobile (9) est entièrement entouré par le stator dans le sens radial et présente au moins un aimant permanent (7) magnétisé parallèlement au stator avec une pièce polaire de bloc mobile (6a, 6b) de chaque côté,
**caractérisé en ce que** le stator (8) comporte au moins (N+2) pièces polaires de stator (2a - 2i).

3. Moteur pas à pas selon l'une des revendications précédentes, **caractérisé en ce que** la distance entre deux pièces polaires de bloc mobile est supérieure ou égale à la distance entre Z ≥ 2 pièces polaires de stator et de préférence supérieure ou égale à la distance entre Z ≥ 2 pièces polaires de stator plus la longueur des pièces polaires de stator dans le sens axial.

4. Moteur pas à pas selon l'une des revendications précédentes, **caractérisé en ce que** le bloc mobile (9) prend, du fait des forces de réluctance, des positions de repos stables dans lesquelles les pièces polaires de stator (2a - 2i) font de préférence face aux pièces polaires de bloc mobile (6a, 6b).

5. Moteur pas à pas selon l'une des revendications précédentes, **caractérisé en ce qu'**un élément optique peut être logé à l'intérieur du bloc mobile (9).

6. Moteur pas à pas selon l'une des revendications précédentes, **caractérisé en ce que** le bloc mobile (9) est symétrique sur son axe de rotation.

7. Moteur pas à pas selon l'une des revendications précédentes, **caractérisé en ce que** le stator (8) est symétrique sur son axe de rotation.

8. Moteur pas à pas selon l'une des revendications précédentes, **caractérisé en ce qu'**un manchon coulissant (5) comprenant un matériau non ferromagnétique à faible coefficient de frottement en surface est disposé entre le stator (8) et le bloc mobile (9).

9. Moteur pas à pas selon l'une des revendications précédentes, **caractérisé en ce que** le bloc mobile (9) est fait de matériau plein et présente seulement un poussoir pour le positionnement d'instruments.

10. Moteur pas à pas selon l'une des revendications précédentes, **caractérisé en ce qu'**il est prévu au moins un autre bloc mobile (9) qui peut être déplacé indépendamment du premier bloc mobile.

11. Procédé de conduite d'un moteur pas à pas selon l'une des revendications précédentes, **caractérisé en ce qu'**afin de réduire le frottement par adhérence et par glissement, un courant alternatif très faible, d'une fréquence maximale de 1 kHz, est superposé au courant continu par l'intermédiaire d'une bobine (3a - 3d).

12. Procédé de conduite d'un moteur pas à pas selon l'une des revendications précédentes, **caractérisé en ce qu'**après le démarrage du moteur pas à pas, un étalonnage est effectué lors duquel le bloc mobile est déplacé dans une position définie, de préférence une position de fin de course.
